# EUROPEAN PATENT SPECIFICATION

(11) **EP 3 029 395 B1**
(45) Date of publication and mention of the grant of the patent: **27.11.2024**
(21) Application number: 14831705.0
(22) Date of filing: 23.05.2014
(51) Int. Cl.: F25B 1/00, C09K 5/04, F04B 39/00, F04C 29/00, F25B 1/04, H02K 3/30

(54) **HEAT PUMP DEVICE**
WÄRMEPUMPENVORRICHTUNG
DISPOSITIF DE POMPE À CHALEUR

(30) Priority: 29.07.2013 JP 2013156732
(43) Date of publication of application: 08.06.2016
(73) Proprietor: Mitsubishi Electric Corporation, Tokyo 100-8310 (JP)
(72) Inventor: MATSUNAGA, Noriaki, Tokyo 100-8310 (JP)
(74) Representative: Pfenning, Meinig & Partner mbB
(86) International application number: PCT/JP2014/063707
(87) International publication number: WO 2015/015881

(56) References cited:
- JP-A- 2004 052 730
- JP-A- 2004 208 446
- JP-A- H08 149 729
- JP-A- H08 284 829
- JP-A- H09 151 851
- JP-A- H09 252 556
- JP-A- H10 159 730
- US-A1- 2012 277 398

## Description

### Technical Field

The present invention relates to a heat pump apparatus, and more particularly, to a heat pump apparatus including a compressor with a sealed container accommodating an electric motor, and being configured to perform a refrigeration cycle.

### Background Art

Hitherto, as a heat pump apparatus, there has been provided an apparatus for performing a refrigeration cycle by sequentially connecting a compressor for compressing refrigerant, a condenser, an expansion mechanism, and an evaporator, to thereby transfer heating energy or cooling energy of the refrigerant to a heat medium (perform heat transfer) in the condenser or the evaporator.

The compressor includes a compression mechanism and an electric motor for rotating and driving the compression mechanism, and the compression mechanism and the electric motor are accommodated in a sealed container. High-pressure and high-temperature refrigerant compressed by the compression mechanism is temporarily discharged into the sealed container. Therefore, the electric motor is exposed to the high-pressure and high-temperature refrigerant. Further, to smooth the rotation of the compression mechanism, a machine oil (hereinafter referred to as "refrigerating machine oil") is stored in the sealed container.

The electric motor includes a stator fixed to the sealed container and a rotator surrounded by the stator and configured to rotate. The rotator is connected to the compression mechanism. The stator has a tubular shape and includes a back yoke portion forming an outer periphery of the stator, a plurality of tooth portions projecting from the back yoke portion to the center, and a winding (electric wire) wound around the tooth portions through intermediation of an insulating material (insulator).

In addition, as the insulating material (insulator), there is disclosed an invention using polyphenylene sulfide (PPS) not having an ester bond (see, for example, Patent Literature 1).

Further, as the insulating material (insulator), there is disclosed an invention using polyethylene terephthalate (PET) or polyethylene naphthalate (PEN) having an ester bond (see, for example, Patent Literature 2). Liquid-crystal polyester resins are also known as insulating material to be used in a motor from document JP 2004208446 A.

### Citation List

### Patent Literature

Patent Literature 1: Japanese Unexamined Patent Application Publication No. 2000-324728 (Page 6, Fig. 2.)
Patent Literature 2: Japanese Unexamined Patent Application Publication No. 2001-227827 (Pages 3-4, Fig. 2.)

### Summary of Invention

### Technical Problem

PPS not having an ester bond, which is a heat insulator disclosed in Patent Literature 1, is a thermoplastic crystalline engineering plastic having a repeating unit of [-ph-S-] obtained by allowing p-dichlorobenzene and an alkali sulfide to react with each other under high temperature and high pressure. PPS has characteristics of relatively excellent heat resistance, no risk of hydrolysis, high heat resistance, satisfactory moldability, and high strength and stiffness. However, there are problems in that, during melt molding, the productivity is degraded owing to a low solidification speed, burrs are liable to occur, and PPS is decomposed in a trace amount to generate a sulfur gas, to thereby corrode a mold.

On the other hand, PET and PEN each having an ester bond, which are heat insulators disclosed in Patent Literature 2, and polybutylene terephthalate (PBT) have hydrolyzability. Therefore, it is necessary to absorb water in a refrigerant circuit during circulation of refrigerant in the refrigerant circuit through use of a refrigerating machine oil having water absorbability, and there is a problem in that, in the case where the refrigerating machine oil has high hygroscopicity and a large saturated water amount, hydrolysis may be caused.

The present invention has been made to solve the above-mentioned problems, and a first object thereof is to obtain long-term reliability of a heat pump apparatus by using an insulating material that is less liable to be hydrolyzed even when a refrigerating machine oil having high hygroscopicity and a high water content in oil is used.

Further, a second object of the present invention is to obtain the long-term reliability of the heat pump apparatus at low cost by using an insulating material having satisfactory productivity without causing burrs and generating a gas containing sulfur during a production step of the insulating material, such as melt molding.

### Solution to Problem

According to one embodiment of the present invention, there is provided a heat pump apparatus, including: a compressor; a condenser; an expansion mechanism; and an evaporator, the compressor, the condenser, the expansion mechanism, and the evaporator being configured to perform a refrigeration cycle, the heat pump apparatus being configured to perform heat transfer in the condenser or the evaporator, in which the compressor includes: a sealed container; a compression mechanism mounted inside the sealed container; and an electric motor for rotating and driving the compression mechanism, the compression mechanism being configured to compress refrigerant, and to be lubricated by a refrigerating machine oil, in which the electric motor includes: a stator fixed to the sealed container with a winding being wound around the stator through intermediation of an insulating material; and a rotator surrounded by the stator, in which the insulating material includes wholly aromatic liquid crystal polyester (LCP) having a main chain of a molecule through an ester bond, the wholly aromatic liquid crystal polyester (LCP) containing p-hydroxybenzoic acid (PHB) as a monomer of essential component, and a monomer having a benzene ring, as another monomer, only the monomer of essential component and the other monomer are forming the ester bond, wherein the wholly aromatic liquid crystal polymer is obtained by polycondensation of a total of five or six kinds of monomers as monomers forming the ester bond among from the monomers containing, as the monomer of essential component, p-hydroxybenzoic acid (PHB), and the monomers containing, as a monomer of additive component, 4,4'-biphenol (BP), hydroquinone (HQ), terephthalic acid (TPA), isophthalic acid (IPA), and/or 6-hydroxy-2-naphthoic acid (BON6), and in which a saturated water amount of the refrigerating machine oil is 0.5 % or more and 1% or less at 40 degrees Celsius and a relative humidity of 80%.

### Advantageous Effects of Invention

According to the one embodiment of the present invention, the insulating material for the electric motor is wholly aromatic liquid crystal polyester (LCP) containing, as an essential component, p-hydroxybenzoic acid (PHB) as a monomer component having an ester bond and having a main chain of a molecule formed by linking p-hydroxybenzoic acid and, as another monomer, only a monomer having a benzene ring, through an ester bond. Therefore, the insulating material has a very low water absorption rate of 0.01 % and a degradation in insulation function caused by hydrolysis is less liable to occur through use of a refrigerating machine oil having a water content in oil of 1% or less, and hence a heat pump apparatus excellent in long-term reliability can be provided.

### Brief Description of Drawings

[Fig. 1] Fig. 1 is a refrigerant circuit diagram illustrating a basic configuration of a heat pump apparatus according to Embodiment 1 of the present invention.
[Fig. 2] Fig. 2 is a side sectional view illustrating a part (compressor) of the heat pump apparatus illustrated in Fig. 1.
[Fig. 3] Fig. 3 is a characteristic graph showing hydrolysis resistance of a part (heat insulator) of the heat pump apparatus illustrated in Fig. 1.

### Description of Embodiments

### [Embodiment 1]

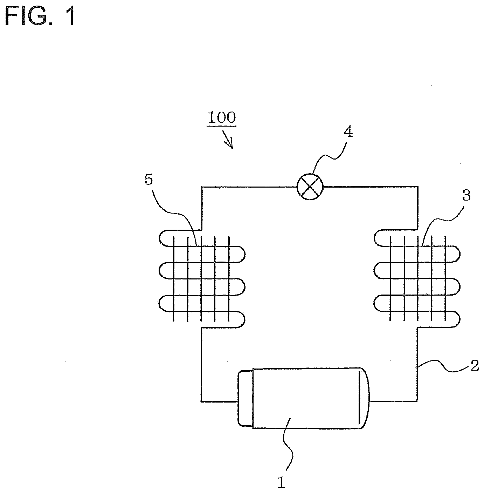

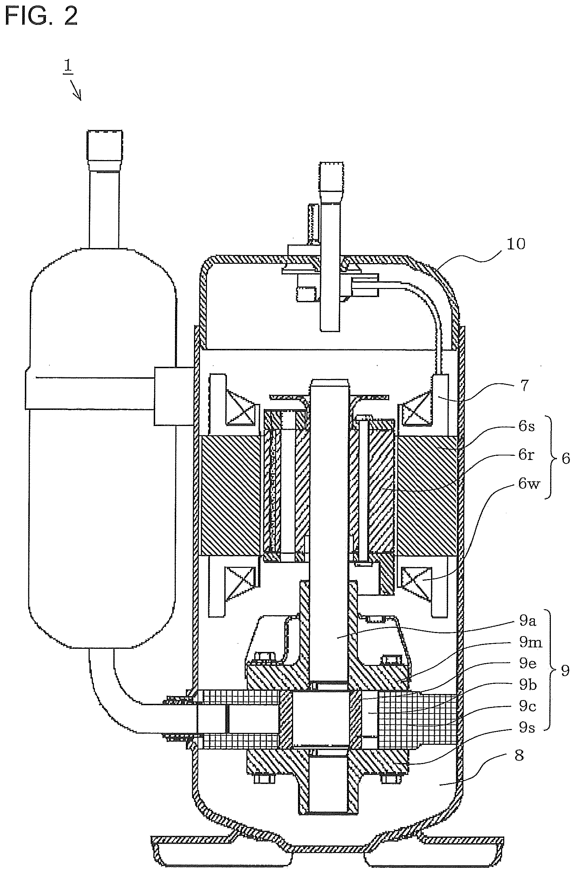

Fig. 1 and Fig. 2 illustrate a heat pump apparatus according to Embodiment 1 of the present invention. Fig. 1 is a refrigerant circuit diagram illustrating a basic configuration of the heat pump apparatus, and Fig. 2 is a side sectional view illustrating a part of the heat pump apparatus (compressor). Note that, each figure is illustrated schematically, and the present invention is not limited to the illustrated forms.

### (Refrigerant Circuit)

In Fig. 1, a heat pump apparatus 100 includes a compressor 1 for compressing refrigerant, a condenser 3 for condensing the refrigerant flowing out from the compressor, an expansion mechanism 4 for subjecting the refrigerant flowing out from the condenser 3 to adiabatic expansion, an evaporator 5 for evaporating the refrigerant flowing out from the expansion mechanism 4, and a refrigerant pipe 2 that sequentially connects the compressor 1, the condenser 3, the expansion mechanism 4, and the evaporator 5 to circulate the refrigerant. Note that, as necessary, a switching valve (such as a four-way valve) for changing a flow direction of the refrigerant may be installed in the refrigerant pipe 2, or an air-sending device for sending air to the condenser 3 and the evaporator 5 or other devices may be arranged in the refrigerant pipe 2.

### (Compressor)

In Fig. 2, the compressor 1 includes a sealed container 10, a compression mechanism 9 arranged in the sealed container 10, and an electric motor 6 for rotating and driving the compression mechanism 9. High-pressure and high-temperature refrigerant compressed by the compression mechanism 9 is temporarily discharged into the sealed container 10. Thus, the electric motor 6 is exposed to the high-pressure and high-temperature refrigerant.

Further, to smooth the rotation of the compression mechanism 9, an oil reservoir 8 for storing a machine oil (hereinafter referred to as "refrigerating machine oil") is formed in a bottom portion of the sealed container 10.

### (Compression Mechanism)

The compression mechanism 9 includes a sealed space (to be exact, an inflow port for the inflow of the refrigerant and an outflow port for the outflow of the refrigerant are formed) formed by a main bearing (upper bearing) 9m, an auxiliary bearing (lower bearing) 9s, and a cylinder 9c having both end surfaces in close contact with the main bearing 9m and the auxiliary bearing 9s, and an eccentric cylinder 9e arranged in the sealed space.

A drive shaft 9a is fixed to the eccentric cylinder 9e, and is rotatably supported by the main bearing 9m and the auxiliary bearing 9s. Therefore, the eccentric cylinder 9e is rotated eccentrically by the rotation of the drive shaft 9a.

Further, a plurality of vanes 9b are arranged in a freely advancing and retracting manner in a plurality of grooves (not shown) formed radially in the cylinder 9c, and are pressed against an outer peripheral surface of the eccentric cylinder 9e. That is, a plurality of spaces are each formed between a pair of vanes, and the volume of the space is changed by the rotation of the eccentric cylinder 9e, to thereby form a compression chamber.

### (Electric Motor)

The electric motor 6 includes a stator 6s fixed to the sealed container and a rotator 6r surrounded by the stator 6s and configured to rotate. The drive shaft 9a forming the compression mechanism 9 is fixed to the rotator 6r.

The stator 6s has a tubular shape, and includes a back yoke portion (not shown) forming an outer periphery of the stator 6s, a plurality of tooth portions (not shown) projecting from the back yoke portion to the center, and a winding (electric wire) 6w wound around the tooth portions through intermediation of an insulating material (insulator) 7.

### (Refrigerant)

The refrigerant contains at least one kind of the following substances (a single substance of the following substances or a combination of two or more kinds thereof).
Difluoromethane (HFC-32)
1,1,1,2,2-Pentafluoroethane (HFC-125)
1,1,1,2-Tetrafluoroethane (HFC-134a)
1,1,1-Trifluoroethane (HFC-143a)
2,2-Dichloro-1,1,1-trifluoroethane (HFC-123)
Trifluoromethane (HFC-23)
1,1-Difluoroethane (HFC-152a)
1,1,2 Trifluoroethylene (R1123)
trans-1,2, Difluoroethylene (R1132(E))
cis-1,2 Difluoroethylene (R1132(Z))
1,1 Difluoroethylene (R1132a)
2,3,3,3-Tetrafluoro-1-propane (HFO-1234yf)
Chlorodifluoromethane (HFC-22)
Carbon dioxide
Ammonia
Dimethyl ether
Propane (R-290)
Isobutane (R-600a)
Butane (R-600)

### (Refrigerating Machine Oil)

The refrigerating machine oil is stored in the oil reservoir 8 of the sealed container 10, and is at least one kind of an ester-based mineral oil, an ether-based mineral oil, a glycol-based mineral oil, an alkyl benzene-based mineral oil, a poly-α-olefin-based mineral oil, a polyvinyl ether-based mineral oil, a fluorine-based mineral oil, a naphthene-based mineral oil, and a paraffin-based mineral oil. That is, the refrigerating machine oil is a single substance of any one kind thereof or a combination of any two or more kinds thereof.

### (Insulating Material)

The insulating material 7 is formed of "LCP". LCP is a collective term of polymers that exhibit liquid crystallinity during melting. LCP has a plurality of molecular structures, and the heat resistance and strength thereof are not constant because the heat resistance and strength depend on monomers for forming LCP.

LCP for forming the insulating material 7 is a thermoplastic resin obtained by copolymerization (polycondensation) of a total of two or more components, the components containing, as an essential component, p-hydroxybenzoic acid (PHB) as a monomer component and having added thereto at least one of the following additive components.

That is, the additive component is at least one component of the following five kinds.
4,4'-Biphenol (BP)
Hydroquinone (HQ)
Terephthalic acid (TPA)
Isophthalic acid (IPA)
6-Hydroxy-2-naphthoic acid (BON6)

For example, the insulating material 7 is formed of "LCP-A" that is a two-component system of PHB and BON6 or "LCP-B" obtained by polycondensation of monomers (PHB, BP, HQ, TPA, IPA, BON6) of a six-component system including the essential component and all the additive components.

**[Table 1]**

| Kind of resin | Raw material monomer of LCP | | | | | | Water absorption rate | Latent heat of crystallization |
|---|---|---|---|---|---|---|---|---|
| | PHB | BP | BON6 | HQ | TPA | IPA | | |
| LCP-A | ○ | - | ○ | - | - | - | 0.01% | 3 J/g |
| LCP-B | ○ | ○ | ○ | ○ | ○ | ○ | 0.01% | 3 J/g |
| PBT | - | - | - | - | - | - | 0.10% | 30 J/g |

In Table 1, the absorption rate and the latent heat of crystallization of LCP-A and LCP-B are smaller values than those of PBT alone (polybutylene terephthalate). Thus, LCP-A and LCP-B each have the following characteristics. The heat resistance and extractability are excellent, and the flow characteristics in the case of being thin is excellent by virtue of a low melt viscosity during molding. The heat transfer amount from a molten state to a solidified state is small, and hence the solidification speed is very high and burrs are less liable to occur during a production step.

Further, LCP-A and LCP-B each have a latent heat of crystallization measured by a differential scanning calorimeter (DSC) of 10 J/g or less, and hence their solidification speeds are high and burrs are less liable to occur during their production steps. Thus, LCP-A and LCP-B each have features of enabling high-cycle molding and having satisfactory productivity.

Specifically, although LCP is hydrolyzed in terms of a molecular structure owing to the ester bond, LCP is not in a state in which molecules are tangled in a rubber form as in an ordinary resin but a liquid crystal resin in which stiff molecules are linearly oriented densely. Thus, LCP has a very low water absorption rate. The water absorption rate of an engineering plastic, such as PBT, is "0.1%", whereas the water absorption rate of LCP is "0.01% (after immersion in water at 23 degrees Celsius for 24 hours), which is a value smaller by a digit or more than the former.

Thus, LCP for forming the insulating material 7 is excellent in heat resistance and extractability, and hence the stability thereof is high with respect to any of the above-mentioned refrigerating machine oils and refrigerant.

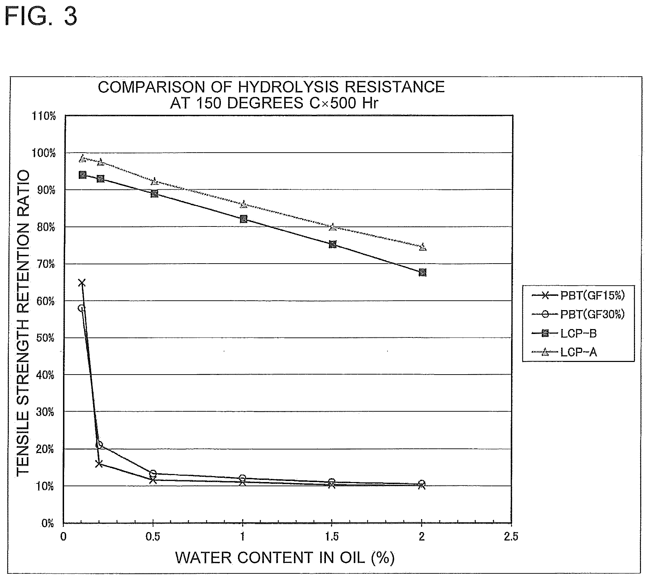

Fig. 3 is a characteristic graph showing hydrolysis resistance of a part (heat insulator) of the heat pump apparatus according to Embodiment 1 of the present invention.

In Fig. 3, the vertical axis represents a tensile strength retention ratio (ratio of strength after a test with respect to the initial strength), and the horizontal axis represents a water content in oil of the refrigerating machine oil, that is, water content in oil (%) at 40 degrees Celsius and a relative humidity of 80%.

Ether oil having high hygroscopicity is used as the refrigerating machine oil, and R32 refrigerant is used as the refrigerant. LCP-A, LCP-B, and PBT for comparison are each immersed in a container in which the ether oil and R32 refrigerant are put at 150 degrees Celsius for 500 hours to determine a tensile strength retention ratio.

In this case, as is apparent from Fig. 3, the tensile strength retention ratio of PBT, which is a comparative material, is only about 60%, even when the water content in oil is 0.1%. Further, when the water content in oil reaches 0.2%, the tensile strength retention ratio decreases drastically. When the water content in oil reaches 0.5% or more, the tensile strength retention ratio is a low value of 10%.

On the other hand, each tensile strength retention ratio of LCP-A and LCP-B of the present invention decreases along with an increase in water content in oil. However, the tensile strength retention ratio is kept at 70% or more when the saturated water amount falls within a range of 2% or less.

Thus, LCP-A and LCP-B of the present invention keep a sufficient insulation function as long as the saturated water amount of the refrigerating machine oil is 2% or less, and can provide the electric motor 6 with high reliability and the heat pump apparatus 100 with high reliability.

Note that, in the foregoing, LCP-A that is a two-component system and LCP-B that is a six-component system exhibit similar hydrolysis resistance characteristics. Thus, the similar hydrolysis resistance characteristics are obtained in the case of monomers of all the combinations of a three-component system and monomers of all the combinations of a four-component system or a five-component system as long as PHB is included.

Note that, LCP is a resin that exhibits an intermediate state between a solid and a liquid in a molten state, that is, a resin in a state in which a number of rod-like molecules are arranged, and has a feature of being solidified in a state close to the molten state. Specifically, LPC is excellent in hydrolyzability for the following reason. LPC is subjected to a shearing force caused by injection or extrusion in a molten state, and molecules are oriented further densely, with the result that water molecules are prevented from entering or permeating a gap between the molecules. Thus, only with LCP, the hydrolyzability is significantly advantageous with respect to an ordinary resin having an ester bond, such as PET or PBT.

Further, LCP is wholly aromatic LCP formed of a molecule having a strong skeleton in which all the six monomer components themselves have aromatic rings, and hence is less liable to be hydrolyzed.

### Reference Signs List

1 compressor 2 refrigerant pipe 3 condenser 4 expansion mechanism 5 evaporator 6 electric motor 6r rotator 6s stator 6w winding 7 insulating material 8 oil reservoir 9 compression mechanism 9a drive shaft 9b vane 9c cylinder9e eccentric cylinder
9m main bearing (upper bearing) 9s auxiliary bearing (lower bearing) 10 sealed container 100 heat pump apparatus

## Claims

1. A heat pump apparatus (100), comprising:
a compressor (1);
a condenser (3);
an expansion mechanism (4); and
an evaporator (5),
the compressor (1), the condenser (3), the expansion mechanism (4), and the evaporator (5) being configured to perform a refrigeration cycle,
the heat pump apparatus (100) being configured to perform heat transfer in the condenser (3) or the evaporator (5),
wherein the compressor (1) includes
a sealed container (10),
a compression mechanism (9) mounted inside the sealed container (10), and
an electric motor (6) configured to rotate and drive the compression mechanism (9),
the compression mechanism (9) being configured to compress refrigerant, and to be lubricated by a refrigerating machine oil,
wherein the electric motor (6) includes
a stator (6s) fixed to the sealed container (10) with a winding being wound around the stator (6s) through intermediation of an insulating material (7), and
a rotator (6r) surrounded by the stator (6s),
wherein the insulating material (7) includes wholly aromatic liquid crystal polyester (LCP) having a main chain of a molecule through an ester bond,
the wholly aromatic liquid crystal polyester (LCP) containing
p-hydroxybenzoic acid (PHB) as a monomer of essential component, and
a monomer having a benzene ring, as an other monomer,
only the monomer of essential component and the other monomer are forming the ester bond,
wherein the wholly aromatic liquid crystal polymer is obtained by polycondensation of a total of five or six kinds of monomers as monomers forming the ester bond among from
the monomers containing, as the monomer of essential component, p-hydroxybenzoic acid (PHB), and
the monomers containing, as a monomer of additive component, 4,4'-biphenol (BP), hydroquinone (HQ), terephthalic acid (TPA), isophthalic acid (IPA), and/or 6-hydroxy-2-naphthoic acid (BON6), and
wherein a saturated water amount of the refrigerating machine oil is 0.5% or more and 1% or less at 40 degrees Celsius and a relative humidity of 80%.

2. The heat pump apparatus (100) of claim 1,
wherein the insulating material (7) includes the wholly aromatic liquid crystal polymer obtained by polycondensation of a total of six kinds of monomers as monomers forming the ester bond among from
the monomers containing, as the monomer of essential component, p-hydroxybenzoic acid (PHB), and
the monomers containing, as the monomer of additive component, a following all five kinds: 4,4'-biphenol (BP), hydroquinone (HQ), terephthalic acid (TPA), isophthalic acid (IPA), and 6-hydroxy-2-naphthoic acid (BON6).

3. The heat pump apparatus (100) of claim 1 or 2, wherein a liquid crystal polymer serving as the insulating material (7) has a latent heat of crystallization measured by a differential scanning calorimeter (DSC) of 10 J/g or less.

4. The heat pump apparatus (100) of any one of claims 1 to 3, wherein the refrigerating machine oil includes a single substance or a combination of substances including at least one kind of an ester-based mineral oil, an ether-based mineral oil, a glycol-based mineral oil, an alkyl benzene-based mineral oil, a poly-α-olefin-based mineral oil, a polyvinyl ether-based mineral oil, a fluorine-based mineral oil, a naphthene-based mineral oil, and a paraffin-based mineral oil.

5. The heat pump apparatus (100) of any one of claims 1 to 4, wherein the refrigerant includes a single substance or a combination of substances including at least one kind of difluoromethane (HFC-32), 1,1,1,2,2-pentafluoroethane (HFC-125), 1,1,1,2-tetrafluoroethane (HFC-134a), 1,1,1-trifluoroethane (HFC-143a), 2,2-dichloro-1,1,1-trifluoroethane (HFC-123), trifluoromethane (HFC-23), 1,1-difluoroethane (HFC-152a), 1,1,2 trifluoroethylene (R1123), trans-1,2-difluoroethylene (R1132(E)), cis-1,2 difluoroethylene (R1132(Z)), 1,1-difluoroethylene (R1132a), 2,3,3,3-tetrafluoro-1-propane (HFO-1234yf), chlorodifluoromethane (HFC-22), carbon dioxide, ammonia, dimethyl ether, propane (R-290), isobutane (R-600a), and butane (R-600).

## Patentansprüche

1. Wärmepumpenvorrichtung (100), umfassend:
einen Verdichter (1);
einen Kondensator (3);
einen Expansionsmechanismus (4); und
einen Verdampfer (5),
wobei der Verdichter (1), der Kondensator (3), der Expansionsmechanismus (4) und der Verdampfer (5) eingerichtet sind, einen Kältekreislauf durchzuführen,
wobei die Wärmepumpenvorrichtung (100) eingerichtet ist, Wärmeübertragung im Kondensator (3) oder im Verdampfer (5) durchzuführen,
wobei der Verdichter (1) umfasst
einen abgedichteten Behälter (10),
einen Verdichtungsmechanismus (9), der im Inneren des abgedichteten Behälters (10) angebracht ist, und
einen Elektromotor (6), der eingerichtet ist, den Verdichtungsmechanismus (9) zu rotieren und anzutreiben,
wobei der Verdichtungsmechanismus (9) eingerichtet ist, Kältemittel zu verdichten und durch ein Kältemaschinenöl geschmiert zu werden,
wobei der Elektromotor (6) aufweist
einen Stator (6s), der an dem abgedichteten Behälter (10) fixiert ist, wobei eine Wicklung durch Intermediation eines Isoliermaterials (7) um den Stator (6s) gewickelt ist, und
einen Rotator (6r), der vom Stator (6s) umgeben ist,
wobei das Isoliermaterial (7) einen vollaromatischen Flüssigkristallpolyester (LCP) aufweist, der eine Hauptkette eines Moleküls durch eine Esterbindung hat,
wobei der vollaromatische Flüssigkristallpolyester (LCP) enthält
p-Hydroxybenzoesäure (PHB) als Monomer einer essentiellen Komponente, und
ein Monomer, aufweisend einen Benzolring als ein anderes Monomer,
wobei nur das Monomer einer essentiellen Komponente und das andere Monomer die Esterbindung bilden,
wobei das vollaromatische Flüssigkristallpolymer durch Polykondensation von insgesamt fünf oder sechs Arten von Monomeren als die Esterbindung bildende Monomere erhalten wird, unter
den Monomeren, die als das Monomer einer essentiellen Komponente p-Hydroxybenzoesäure (PHB) enthalten, und
den Monomeren, die als Monomer einer Additivkomponente 4,4'-Biphenol (BP), Hydrochinon (HQ), Terephthalsäure (TPA), Isophthalsäure (IPA) und/oder 6-Hydroxy-2-naphthoesäure (BON6) enthalten, und
wobei eine gesättigte Wassermenge des Kältemaschinenöls 0,5 % oder mehr und *1 % oder* weniger bei 40 Grad Celsius und einer relativen Feuchtigkeit von 80 % beträgt.

2. Wärmepumpenvorrichtung (100) nach Anspruch 1,
wobei das Isoliermaterial (7) das vollaromatische Flüssigkristallpolymer aufweist, das durch Polykondensation von insgesamt sechs Arten von Monomeren als Esterbindungen bildende Monomere erhalten wird, unter
den Monomeren, die als das Monomer einer essentiellen Komponente p-Hydroxybenzoesäure (PHB) enthalten, und
den Monomeren, die als das Monomer einer Additivkomponente eine folgende aller fünf Arten enthält: 4,4'-Biphenol (BP), Hydrochinon (HQ), Terephthalsäure (TPA), Isophthalsäure (IPA) und 6-Hydroxy-2-naphthoesäure (BON6).

3. Wärmepumpenvorrichtung (100) nach Anspruch 1 oder 2, wobei ein als Isoliermaterial (7) dienendes Flüssigkristallpolymer eine mit einem dynamischen Differenzkalorimeter (DSC) gemessene latente Kristallisationswärme von 10 J/g oder weniger aufweist.

4. Wärmepumpenvorrichtung (100) nach einem der Ansprüche 1 bis 3, wobei das Kältemaschinenöl eine einzelne Substanz oder eine Kombination von Substanzen aufweist, die mindestens eine Art eines Mineralöls auf Esterbasis, eines Mineralöls auf Etherbasis, eines Mineralöls auf Glykolbasis, eines Mineralöls auf Alkylbenzolbasis, eines Mineralöls auf Poly-α-Olefinbasis, eines Mineralöls auf Polyvinyletherbasis, eines Mineralöls auf Fluorbasis, eines Mineralöls auf Naphthenbasis und eines Mineralöls auf Paraffinbasis aufweist.

5. Wärmepumpenvorrichtung (100) nach einem der Ansprüche 1 bis 4, wobei das Kältemittel eine einzelne Substanz oder eine Kombination von Substanzen aufweist, die mindestens eine Art von Difluormethan (HFC-32), 1,1,1,2,2-Pentafluorethan (HFC-125), 1,1,1,2-Tetrafluorethan (HFC-134a), 1,1,1-Trifluorethan (HFC-143a), 2,2-Dichlor-1,1,1-Trifluorethan (HFC-123), Trifluormethan (HFC-23), 1,1-Difluorethan (HFC-152a), 1,1,2-Trifluorethylen (R1123), Trans-1,2-Difluorethylen (R1132(E)), Cis-1,2-Difluorethylen (R1132(Z)), 1,1-Difluorethylen (R1132a), 2,3,3,3-Tetrafluor-1-propan (HFO-1234yf), Chlordifluormethan (HFC-22), Kohlendioxid, Ammoniak, Dimethylether, Propan (R-290), Isobutan (R-600a) und Butan (R-600) aufweist.

## Revendications

1. Appareil de pompe à chaleur (100), comprenant :
un compresseur (1) ;
un condenseur (3) ;
un mécanisme de détente (4) ; et
un évaporateur (5),
le compresseur (1), le condenseur (3), le mécanisme de détente (4) et l'évaporateur (5) étant configurés pour effectuer un cycle de réfrigération,
l'appareil de pompe à chaleur (100) étant configuré pour effectuer un transfert de chaleur dans le condenseur (3) ou l'évaporateur (5),
dans lequel le compresseur (1) inclut
un récipient étanche (10),
un mécanisme de compression (9) monté à l'intérieur du récipient étanche (10), et
un moteur électrique (6) configuré pour faire tourner et entraîner le mécanisme de compression (9),
le mécanisme de compression (9) étant configuré pour comprimer du fluide frigorigène et pour être lubrifié par une huile de machine frigorifique,
dans lequel le moteur électrique (6) inclut
un stator (6s) fixé au récipient étanche (10) avec un enroulement enroulé autour du stator (6s) par l'intermédiaire d'un matériau isolant (7), et
un rotateur (6r) entouré par le stator (6s),
dans lequel le matériau isolant (7) inclut un polyester à cristaux liquides entièrement aromatique (LCP) présentant une chaîne principale d'une molécule par l'intermédiaire d'une liaison ester,
le polyester à cristaux liquides entièrement aromatique (LCP) contenant
de l'acide p-hydroxybenzoïque (PHB) en tant que monomère de composant essentiel, et
un monomère présentant un cycle benzénique, en tant qu'autre monomère,
seul le monomère de composant essentiel et l'autre monomère forment la liaison ester,
dans lequel le polymère à cristaux liquides entièrement aromatique est obtenu par polycondensation d'un total de cinq ou six types de monomères en tant que monomères formant la liaison ester parmi
les monomères contenant, en tant que monomère de composant essentiel, de l'acide p-hydroxybenzoïque (PHB), et
les monomères contenant, en tant que monomère de composant additif, du 4,4'-biphénol (BP), de l'hydroquinone (HQ), de l'acide téréphtalique (TPA), de l'acide isophtalique (IPA) et/ou de l'acide 6-hydroxy-2-naphtoïque (BON6), et
dans lequel une quantité d'eau saturée de l'huile de machine frigorifique est de 0,5 % ou plus et de 1 % ou moins à 40 degrés Celsius et une humidité relative de 80 %.

2. Appareil de pompe à chaleur (100) selon la revendication 1,
dans lequel le matériau isolant (7) inclut le polymère à cristaux liquides entièrement aromatique obtenu par polycondensation d'un total de six types de monomères en tant que monomères formant la liaison ester parmi
les monomères contenant, en tant que monomère de composant essentiel, de l'acide p-hydroxybenzoïque (PHB), et
les monomères contenant, comme monomère du composant additif, les cinq types suivants : 4,4'-biphénol (BP), hydroquinone (HQ), acide téréphtalique (TPA), acide isophtalique (IPA) et acide 6-hydroxy-2-naphtoïque (BON6).

3. Appareil de pompe à chaleur (100) selon la revendication 1 ou 2, dans lequel un polymère à cristaux liquides servant de matériau isolant (7) présente une chaleur de cristallisation latente mesurée par un calorimètre à balayage différentiel (DSC) de 10 J/g ou moins.

4. Appareil de pompe à chaleur (100) selon l'une quelconque des revendications 1 à 3, dans lequel l'huile de la machine frigorifique inclut une substance unique ou une combinaison de substances incluant au moins un type parmi une huile minérale à base d'ester, une huile minérale à base d'éther, une huile minérale à base de glycol, une huile minérale à base d'alkylbenzène, une huile minérale à base de poly-α-oléfine, une huile minérale à base d'éther polyvinylique, une huile minérale à base de fluor, une huile minérale à base de naphtène et une huile minérale à base de paraffine.

5. Appareil de pompe à chaleur (100) selon l'une quelconque des revendications 1 à 4, dans lequel le fluide frigorigène inclut une substance unique ou une combinaison de substances incluant au moins un type de difluorométhane (HFC-32), 1,1,1,2,2-pentafluoroéthane (HFC-125), 1,1,1,2-tétrafluoroéthane (HFC-134a), 1,1,1-trifluoroéthane (HFC-143a), 2,2-dichloro-1,1,1-trifluoroéthane (HFC-123), trifluorométhane (HFC-23), 1,1-difluoroéthane (HFC-152a), 1,1,2-trifluoroéthylène (R1123), trans-1,2-difluoroéthylène (R1132(E)), cis-1,2-difluoroéthylène (R1132(Z)), 1,1-difluoroéthylène (R1132a), 2,3,3,3-tétrafluoro-1-propane (HFO-1234yf), chlorodifluorométhane (HFC-22), dioxyde de carbone, ammoniac, diméthyléther, propane (R-290), isobutane (R-600a) et butane (R-600).
